# EUROPÄISCHE PATENTSCHRIFT

(11) **EP 3 501 127 B1**
(45) Veröffentlichungstag und Bekanntmachung des Hinweises auf die Patenterteilung: **09.09.2020**
(21) Anmeldenummer: 17742179.9
(22) Anmeldetag: 06.07.2017
(51) Int. Cl.: H04L 1/08, H04L 29/08

(54) **VERFAHREN UND SYSTEM ZUM ÜBERTRAGEN EINES DATENPAKETS VON EINEM SENSOR ZU EINEM STEUERGERÄT**
METHOD AND SYSTEM FOR TRANSMITTING A DATA PACKET FROM A SENSOR TO A CONTROLLER
PROCÉDÉ ET SYSTÈME POUR TRANSMETTRE UN PAQUET DE DONNÉES D'UN CAPTEUR À UN APPAREIL DE COMMANDE

(30) Priorität: 19.08.2016 DE 102016215640
(43) Veröffentlichungstag der Anmeldung: 26.06.2019
(73) Patentinhaber: Robert Bosch GmbH, 70442 Stuttgart (DE)
(72) Erfinder: SCHUMACHER, Hartmut, 71691 Freiberg (DE); WEISS, Guenter, 74399 Walheim (DE)
(86) Internationale Anmeldenummer: PCT/EP2017/066895
(87) Internationale Veröffentlichungsnummer: WO 2018/033294

(56) Entgegenhaltungen:
- DE-A1-102014 113 162
- DE-A1-102015 206 380
- DE-C1- 19 857 154

## Beschreibung

### Stand der Technik

Die Erfindung geht aus von einem Steuergerät oder einem Verfahren nach Gattung der unabhängigen Ansprüche. Gegenstand der vorliegenden Erfindung ist auch ein Computerprogramm.

Eine Datenübertragung über ein ungeschirmtes Kabel kann durch elektromagnetische Einflüsse gestört werden. Wenn ein Datenpaket gestört ist, kann das Datenpaket erneut abgefragt werden. Dazu ist jedoch ein großer Kommunikationsaufwand erforderlich, währenddessen keine weiteren Datenpakete übertragen werden können.

DE 10 2015 206380 A1 offenbart ein Verfahren zum Betreiben eines Übertragungssystem, bei dem Daten als Datenpakete übertragen werden und jedes Datenpaket mehrfach über die gleiche Übertragungsstrecke übertragen wird. DE 10 2014 113162 A1 offenbart ein Verfahren zur Übertragung von Daten in einem Kommunikationssystem. Wenn die Anzahl der tatsächlichen Bus-Teilnehmer kleiner als die Zahl der möglichen Teilnehmer ist, kann ein Teilnehmer prinzipiell nicht nur in dem ihm zugewiesenen Zeitbereich, sondern auch in einem anderen Zeitbereich senden. DE 198 57 154 C1 offenbart ein Verfahren zur Datenübertragung, bei dem binäre Originaldaten und auch die invertierten Originaldaten übertragen werden und ein bitweiser Vergleich zwischen den Originaldaten und den invertierten Originaldaten durchgeführt wird, um eine fehlerfreie Datenübertragung sicherzustellen.

### Offenbarung der Erfindung

Vor diesem Hintergrund werden mit dem hier vorgestellten Ansatz ein Verfahren zum Übertragen eines Datenpakets von einem Sensor zu einem Steuergerät, weiterhin ein Sensor und ein Steuergerät, die dieses Verfahren verwenden, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen des im unabhängigen Anspruch angegebenen Steuergeräts möglich.

Um ein Datenpaket zumindest einmal mit einer hohen Wahrscheinlichkeit korrekt zu übertragen, kann das Datenpaket mehrfach hintereinander gesendet werden, sodass ein gestörtes Datenpaket verworfen werden kann. Insbesondere bei einer peripheren Sensorschnittstelle 5 (PSI5), die zur Übertragung der Datenpakete mehrerer Sensoren geeignet ist, kann bei Anschluss eines einzelnen Sensors die überschüssige Kommunikationskapazität der Sensorschnittstelle genutzt werden, um Datenpakete redundant zu übertragen, ohne einen Zeitverlust durch zusätzliche Abfragen des Steuergeräts zu verursachen.

Es wird ein Verfahren zum Übertragen eines Datenpakets von einem Sensor zu einem Steuergerät über eine periphere Sensorschnittstelle 5 (PSI5) vorgestellt, wobei in einem Schritt des Sendens in einem durch das Steuergerät synchronisierten Betriebsmodus der Sensorschnittstelle das Datenpaket von dem Sensor über die Sensorschnittstelle in einem Zeitschlitz eines Übertragungszeitraums des Betriebsmodus gesendet wird und innerhalb des Übertragungszeitraums in zumindest einem weiteren Zeitschlitz des Übertragungszeitraums das Datenpaket von dem Sensor erneut gesendet wird.

Unter einer peripheren Sensorschnittstelle kann eine Schnittstelle zum Anschließen eines Sensors an ein Steuergerät unter Verwendung einer zweiadrigen elektrischen Leitung verstanden werden. Die periphere Sensorschnittstelle 5 ((Peripheral Sensor Interface 5) weist ein robustes Kommunikationsprotokoll auf. Ein Betriebsmodus kann durch das Steuergerät beeinflusst werden. Der Betriebsmodus kann asynchron oder synchron sein. Im synchronen Betriebsmodus kann das Steuergerät Synchronisationssignale zum Takten beziehungsweise Synchronisieren der Übertragung bereitstellen. Ein Synchronisationssignal kann einen Anfang eines Übertragungszeitraums definieren. Der Übertragungszeitraum umfasst mehrere aufeinander abfolgende Zeitschlitze. Eine Länge des Übertragungszeitraums kann durch das Kommunikationsprotokoll definiert sein. Eine Anzahl von Zeitschlitzen innerhalb eines Übertragungszeitraums kann ebenfalls durch das Kommunikationsprotokoll definiert sein. Ein Zeitschlitz kann ein Zeitabschnitt innerhalb des Übertragungszeitraums sein, der zum Übertragen eines Datenpakets geeignet ist.

Das Verfahren kann einen Schritt des Empfangens aufweisen, in dem das Datenpaket im Zeitschlitz von dem Steuergerät über die periphere Sensorschnittstelle empfangen wird und in dem zumindest einen weiteren Zeitschlitz das Datenpaket von dem Steuergerät erneut empfangen wird. Das Übertragen kann das Senden und das Empfangen umfassen. Senden und Empfangen werden auf räumlich voneinander getrennten Einheiten ausgeführt.

Das Verfahren kann einen Schritt des Überprüfens aufweisen, in dem das im Zeitschlitz empfangene Datenpaket und das im weiteren Zeitschlitz empfangene Datenpaket miteinander verglichen werden. Beim Überprüfen kann eine Störung der Übertragung erkannt werden. Wenn bei dem Vergleich der Datenpakete ein Unterschied festgestellt wird, ist sicher eines der Datenpakete gestört übertragen worden. Die Datenpakete selbst können eine Überprüfungsinformation, wie beispielsweise eine Prüfsumme umfassen. Durch den Vergleich und die Überprüfungsinformation kann mit großer Wahrscheinlichkeit das ungestörte Datenpaket zur weiteren Verwendung ausgewählt werden.

Im Schritt des Sendens kann innerhalb des Übertragungszeitraums das Datenpaket in einem freien Zeitschlitz des Übertragungszeitraums noch mal gesendet werden. Durch ein Senden des gleichen Datenpakets in den freien Zeitschlitzen eines Übertragungszeitraums kann die Redundanz der Übertragung erhöht werden. Insbesondere bei einer stark gestörten Umgebung kann die im Datenpaket enthaltene Information mit einer großen Wahrscheinlichkeit sicher übertragen werden.

Im Schritt des Sendens kann in einem zwischen dem Zeitschlitz und dem weiteren Zeitschlitz befindlichen zusätzlichen Zeitschlitz des Übertragungszeitraums ein weiteres Datenpaket über die periphere Sensorschnittstelle gesendet werden. Innerhalb des Übertragungszeitraums kann das weitere Datenpaket in einem auf den weiteren Zeitschlitz nachfolgenden Zeitschlitz des Übertragungszeitraums erneut gesendet werden. Wenn zwei unterschiedliche Datenpakete zu übertragen sind, können die Datenpakete abwechselnd gesendet werden. Auch dabei können weitere freie Zeitschlitze des Übertragungszeitraums zum Senden der Datenpakete verwendet werden.

Im Schritt des Empfangens kann in dem zusätzlichen Zeitschlitz das weitere Datenpaket empfangen werden. In dem auf den weiteren Zeitschlitz nachfolgenden Zeitschlitz kann das weitere Datenpaket erneut empfangen werden. Während des Empfangens kann zwischen den Datenpaketen unterschieden werden. Die unterschiedlichen Datenpakete können in unterschiedlichen Registern gespeichert werden.

Im Schritt des Überprüfens können das in dem zusätzlichen Zeitschlitz empfangene weitere Datenpaket und das in dem auf den weiteren Zeitschlitz nachfolgenden Zeitschlitz empfangene weitere Datenpaket miteinander verglichen werden. Die Überprüfung kann bei den weiteren Datenpaketen durchgeführt werden, um auch bei den weiteren Datenpaketen eine Störung der Übertragung zu erkennen.

Dieses Verfahren kann beispielsweise in Software oder Hardware oder in einer Mischform aus Software und Hardware beispielsweise in einem Steuergerät implementiert sein.

Weiterhin wird ein Sensor zum Übertragen eines Datenpakets zu einem Steuergerät über eine periphere Sensorschnittstelle 5 (PSI5) vorgestellt, wobei der Sensor eine Sendeeinrichtung aufweist, die dazu ausgebildet ist, in einem durch das Steuergerät synchronisierten Betriebsmodus der Sensorschnittstelle das Datenpaket in einem Zeitschlitz eines Übertragungszeitraums des Betriebsmodus zu senden und innerhalb des Übertragungszeitraums in zumindest einem weiteren Zeitschlitz des Übertragungszeitraums das Datenpaket erneut zu senden.

Ferner wird ein Steuergerät zum Betreiben einer peripheren Sensorschnittstelle 5 (PSI5) vorgestellt, wobei das Steuergerät eine Empfangseinrichtung aufweist, die dazu ausgebildet ist, in einem durch das Steuergerät synchronisierten Betriebsmodus der Sensorschnittstelle ein Datenpaket in einem Zeitschlitz eines Übertragungszeitraums des Betriebsmodus über die Sensorschnittstelle zu empfangen und in zumindest einem weiteren Zeitschlitz des Übertragungszeitraums das Datenpaket über die Sensorschnittstelle erneut zu empfangen.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 ein Blockschaltbild eines über eine periphere Sensorschnittstelle 5 mit einem Steuergerät verbundenen Sensors gemäß einem Ausführungsbeispiel;
Fig. 2 eine Darstellung eines Übertragens von Datenpaketen gemäß einem Ausführungsbeispiel; und
Fig. 3 ein Ablaufdiagramm eines Verfahrens zum Übertragen eines Datenpakets gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

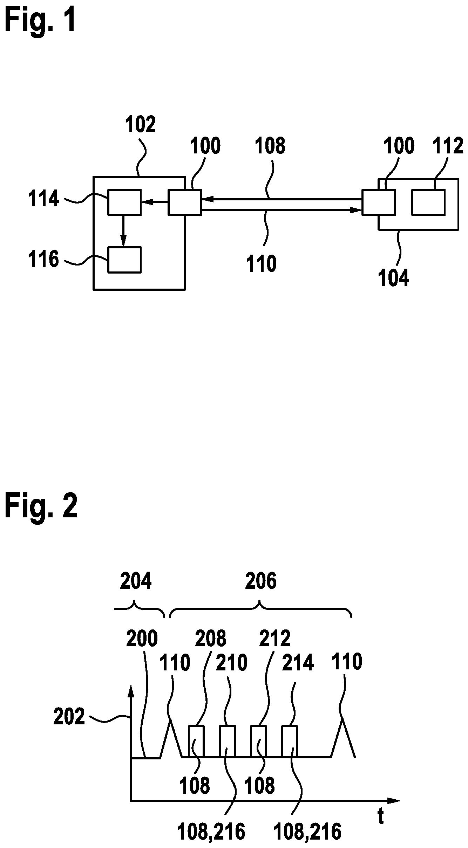

Fig. 1 zeigt ein Blockschaltbild eines über eine periphere Sensorschnittstelle 5 (PSI5) 100 mit einem Steuergerät 102 verbundenen Sensors 104 gemäß einem Ausführungsbeispiel. Die PSI5 Schnittstelle 100 ermöglicht die Kommunikation des Sensors 104 mit dem Steuergerät 102 über eine zweiadrige Leitung 106. Dazu weisen das Steuergerät 102 und der Sensor 104 je eine PSI5 Schnittstelle 100 auf. Die Schnittstelle 100 weist ein Kommunikationsprotokoll auf, das drei Modi beziehungsweise Betriebsarten vorsieht.

In einem asynchronen Modus ist das Steuergerät 102 dauerhaft empfangsbereit und eine Kommunikation erfolgt über die Schnittstelle 100 von dem Sensor 104 zu dem Steuergerät 102, wenn der Sensor ein Datenpaket 108 zu übermitteln hat.

In einem synchronen Modus synchronisiert das Steuergerät 102 die Kommunikation über die Leitung 106 durch ein Synchronisationssignal 110. Ansprechend auf das Synchronisationssignal 110 beginnt ein Übertragungszeitraum. Innerhalb des Übertragungszeitraums sendet der Sensor 104 sein Datenpaket 108 während eines ihm zugewiesenen Zeitschlitzes. Durch die synchronisierte Kommunikation können mehrere Sensoren 104 über die gleiche Schnittstelle 100 betrieben werden, da jedem Sensor 104 innerhalb des Übertragungszeitraums ein eigener Zeitschlitz zugewiesen werden kann.

Bei dem hier vorgestellten abgesicherten Modus wird die Kommunikation ebenfalls durch das Steuergerät 102 über das Synchronisationssignal 110 synchronisiert. Es ist jedoch wie beim asynchronen Modus nur ein Sensor 104 über die Schnittstelle 100 mit dem Steuergerät 102 verbunden. Im abgesicherten Modus sendet der Sensor 104 das Datenpaket 108 mehrmals in mehreren Zeitschlitzen des Übertragungszeitraums.

Dazu weist der Sensor 104 eine Sendeeinrichtung 112 auf, die dazu ausgebildet ist, in dem abgesicherten Betriebsmodus das Datenpaket 108 in einem ersten Zeitschlitz des Übertragungszeitraums und in zumindest einem nachfolgenden zweiten Zeitschlitz des Übertragungszeitraums über die PSI5 Schnittstelle 100 zu senden.

Das Steuergerät 102 weist eine Empfangseinrichtung 114 auf, die dazu ausgebildet ist, in dem abgesicherten Betriebsmodus das Datenpaket 108 in dem ersten Zeitschlitz des Übertragungszeitraums zu empfangen und das Datenpaket 108 in dem zumindest einen nachfolgenden zweiten Zeitschlitz des Übertragungszeitraums erneut über die PSI5 Schnittstelle 100 zu empfangen.

In einem Ausführungsbeispiel weist das Steuergerät 102 eine Überprüfungseinrichtung 116 auf. Die Überprüfungseinrichtung 116 ist dazu ausgebildet, das im ersten Zeitschlitz empfangene Datenpaket 108 mit dem im zweiten Zeitschlitz empfangenen Datenpaket 108 zu vergleichen. Bei dem Vergleich kann eine Störung in einem der Zeitschlitze festgestellt werden.

Die Datenpakete 108 können über Fehlerkontrollmechanismen einzeln überprüft werden. Wenn in Kombination der Überprüfungen eines der Datenpakete 108 als fehlerhaft erkannt wird und das andere Datenpaket 108 als fehlerfrei erkannt wird, kann das fehlerhafte Datenpaket 108 verworfen werden und das fehlerfreie Datenpaket 108 weiter verwendet werden.

Fig. 2 zeigt eine Darstellung eines Übertragens von Datenpaketen 108 gemäß einem Ausführungsbeispiel. Das Übertragen ist anhand eines zeitlichen Verlaufs 200 einer elektrischen Größe 202 einer PSI5 Leitung, wie sie beispielsweise in Fig. 1 abgebildet ist, dargestellt. Der Verlauf 200 ist in einem Diagramm aufgetragen, das auf seiner Abszisse die Zeit t und auf seiner Ordinate die elektrische Größe 202 angetragen hat. Die elektrische Größe 202 kann beispielsweise ein Stromfluss oder eine Spannung sein. Im abgesicherten Modus ist der Verlauf 200 durch Synchronisationssignale 110 in Übertragungszeiträume 204, 206 gegliedert. Nach einem Synchronisationssignal 110 folgt in diesem Ausführungsbeispiel innerhalb eines Übertragungszeitraums 206 eine Abfolge von vier durch den PSI5 Standard definierten Zeitschlitzen 208, 210, 212, 214.

In einem Ausführungsbeispiel wird in jedem Zeitschlitz 208, 210, 212, 214 das gleiche Datenpaket 108 redundant übertragen. Hier damit also vier Mal redundant.

In einem Ausführungsbeispiel wird im ersten Zeitschlitz 208 das erste Datenpaket 108 übertragen. Im zweiten Zeitschlitz 210 wird ein zweites Datenpaket 216 übertragen. Im dritten Zeitschlitz 212 wird erneut das erste Datenpaket 108 übertragen und im vierten Zeitschlitz 214 wird erneut das zweite Datenpaket 216 übertragen. Somit werden sowohl das erste Datenpaket 108 als auch das zweite Datenpaket 216 doppelt und damit redundant übertragen.

Es wird eine Steigerung der Robustheit einer PSI5 Übertragung durch Zeitschlitzredundanz vorgestellt. Durch den hier vorgestellten Ansatz kann eine Erhöhung der EMV-Robustheit von PSI5 Schnittstellen erreicht werden.

Der PSI5 Schnittstellenstandard erlaubt die digitale Übertragung von Sensordaten zu einem Steuergerät (SG) in einem asynchronen Modus und in einem synchronen Modus. Im asynchronen Modus bestimmt der Sensor den Zeitpunkt, wann ein Datenpaket gesendet wird. Pro PSI5 Interface kann nur ein Sensor an ein Steuergerät angeschlossen werden. Im synchronen Mode erfolgt eine Synchronisierung der Sensoreinheit(en) durch das Steuergerät. Dadurch können mehrere Sensoren über eine gemeinsame PSI5 Schnittstelle ihre Daten über getrennte Zeitschlitze 208, 210, 212, 214 an das Steuergerät übertragen. Der synchrone Modus kann als Bus-Mode bezeichnet werden. Die Sensorschnittstelle erhält dadurch eine effizientere Nutzung, was zur Verringerung der Anzahl benötigter PSI5 Schnittstellen in einem Steuergerät führen kann.

Von einer Störung auf der PSI5 Leitung, beispielsweise einem Kurzschluss, können allerdings alle angeschlossenen Sensoren betroffen sein. Manche Anwender schließen daher an ein synchrones PSI5 Interface immer nur einen Sensor an und betreiben die PSI5 Schnittstellen im Punkt-zu-Punkt Betrieb (P2P). Mehrere Zeitschlitze 210, 212, 214 bleiben unbenutzt.

Ungenutzte Zeitschlitze 210, 212, 214 bei synchroner Punkt-zu-Punkt Übertragung können dazu verwendet werden, die Störsicherheit der Übertragung zu erhöhen. Dazu wird das Datenpaket 108 des Sensors nicht nur im vorgesehenen Zeitschlitz 208, sondern in mindestens einem weiteren Zeitschlitz 210, 212, 214 übertragen.

Bei Störungen, die nur einen Zeitschlitz 208, 210, 212, 214 betreffen, beispielsweise bei einer Burststörung kann eine ungestörte Übertragung im ungestörten Zeitschlitz 208, 210, 212, 214 erfolgen. Eine maximale Störsicherheit bietet die Übertragung der Daten 108 in allen freien Zeitschlitzen 208, 210. 212. 214. So ist im 125 kB Modus eine dreifache Übertragung der Daten 108 eines Sensors möglich.

Bei einem Sensor der zwei Zeitschlitze 208, 210 belegt, beispielsweise einem Zweikanalsensor, bietet der 189 kB Modus mit seinen vier Zeitschlitzen 208, 210, 112, 214 eine doppelte Datenübertragung.

Bei dem hier vorgestellten Ansatz sind externe Sensoren für den synchronen Punkt-zu-Punkt Betrieb mit einem neuen Redundanz-Modus (R-Mode) versehen. Dieser kann herstellerseitig am Bandende vor Auslieferung fest programmiert (NVM) oder über das Airbag-Steuergerät in der Initialisierungsphase in jedem Power-On Zyklus festgelegt werden. Durch die Auswahl dieses R-Modus werden die ermittelten Sensordaten 108 in den freien Zeitschlitzen 210, 212, 214 des PSI5 Standards wiederholt. Dadurch steigt die Verfügbarkeit und Performance des Systems, da bei einer Burststörung das gestörte Datenpaket 108 als fehlerhaft oder fehlend erkannt wird und somit nicht zur Crashdiskriminierung verwendet wird. Das in dem weiteren Zeitschlitz 210, 212, 214 gesendete, ungestörte Datenpaket 108 kann zur Crashdiskriminierung verwendet werden. Die erhöhte Verfügbarkeit der Sensordaten wirkt sich bei Seitencrashs besonders positiv auf den Insassenschutz aus, da diese eine sehr schnelle Crasherkennung erfordern.

Bei synchronen PSI5 Schnittstellen, die im Punkt-zu-Punkt Modus betrieben werden, wird durch den hier vorgestellten Ansatz eine Robustheit gegen Störeinstrahlung erhöht. Weiterhin wird die Verfügbarkeit der Sensordaten im Steuergerät verbessert.

Steuergeräteseitig entsteht kein zusätzlicher Hardwareaufwand. Der zusätzliche Aufwand auf der Sensorseite ist gering und beschränkt sich auf den Digitalteil.

Im Steuergerät können die mehrfach übertragenen Daten 108 zusätzlich zur Auswertung von Übertragungsfehlern durch Datenvergleich überprüft werden. Die Sicherheit korrekte Daten 108 zu empfangen wird erhöht.

Bei dem hier vorgestellten Ansatz erfolgt eine mehrfache Datenübertragung in unterschiedlichen Zeitschlitzen 208, 210, 212, 214. Eine Funktionsprüfung ist durch eine Stromzangenmessung an der PSI5 Leitung möglich.

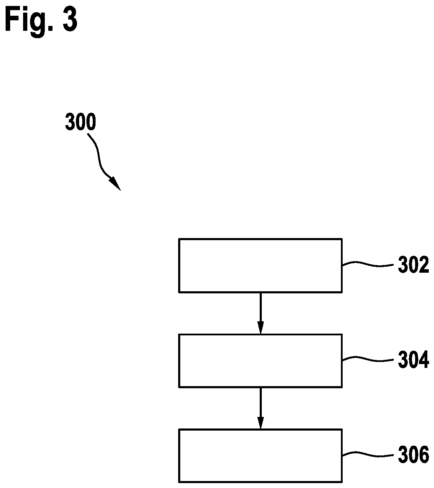

Fig. 3 zeigt ein Ablaufdiagramm eines Verfahrens 300 zum Übertragen eines Datenpakets gemäß einem Ausführungsbeispiel. Das Verfahren 300 kann in einem Sensor, wie er beispielsweise in Fig. 1 dargestellt ist, ausgeführt werden, um das Datenpaket über eine periphere Sensorschnittstelle 5 (PSI5) zu einem Steuergerät zu übertragen. Das Verfahren 300 weist einen Schritt 302 des Sendens auf. Im Schritt 302 des Sendens wird in einem durch das Steuergerät synchronisierten Betriebsmodus der Sensorschnittstelle das Datenpaket von dem Sensor über die Sensorschnittstelle in einem Zeitschlitz eines Übertragungszeitraums des Betriebsmodus gesendet. Innerhalb des Übertragungszeitraums wird das Datenpaket von dem Sensor in zumindest einem weiteren Zeitschlitz des Übertragungszeitraums erneut gesendet.

In einem Ausführungsbeispiel umfasst das Verfahren einen Schritt 304 des Empfangens. Der Schritt des Empfangens kann auf einem Steuergerät, wie es beispielsweise in Fig. 1 dargestellt ist, ausgeführt werden. Im Schritt 304 des Empfangens wird das Datenpaket im Zeitschlitz von dem Steuergerät über die periphere Sensorschnittstelle empfangen. In dem zumindest einen weiteren Zeitschlitz wird das Datenpaket von dem Steuergerät erneut empfangen.

In einem Ausführungsbeispiel werden in einem Schritt 306 des Überprüfens das im Zeitschlitz empfangene Datenpaket und das im weiteren Zeitschlitz empfangene Datenpaket miteinander verglichen. Da die Datenpakete identisch sein sollen, kann eine Störung bei der Übertragung durch den Vergleich erkannt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Übertragen eines Datenpakets (108) von einem Sensor (104) zu einem Steuergerät (102) über eine periphere Sensorschnittstelle (100), insbesondere eine periphere Sensorschnittstelle : gemäß Peripheral Sensor Interface 5, PSI5, in einem durch das Steuergerät (102) synchronisierten Betriebsmodus der Sensorschnittstelle (100), in dem mehrere Sensoren (104) über die gleiche Schnittstelle (100) betrieben werden können, da jedem Sensor (104) innerhalb eines Übertragungszeitraums ein eigener Zeitschlitz zugewiesen werden kann, wobei bei dem Verfahren (300) in einem abgesicherten synchronisierten Betriebsmodus nur der eine Sensor (104) über die Sensorschnittstelle (100) mit dem Steuergerät (102) verbunden ist, wobei der Übertragungszeitraum (206) mehrere aufeinander abfolgende Zeitschlitze umfasst und ein Anfang des Übertragungszeitraums durch ein von dem Steuergerät (102) bereitgestelltes Synchronisationssignal definiert wird, und wobei in einem Schritt (302) des Sendens in dem durch das Steuergerät (102) abgesicherten synchronisierten Betriebsmodus der Sensorschnittstelle (100) das Datenpaket (108) von dem Sensor (104) über die Sensorschnittstelle (100) in einem Zeitschlitz (208) des Übertragungszeitraums (206) des abgesicherten synchronisierten Betriebsmodus gesendet wird und innerhalb des Übertragungszeitraums (206) in zumindest einem weiteren Zeitschlitz (210, 212, 214) des Übertragungszeitraums (206) das Datenpaket (108) von dem Sensor (104) erneut gesendet wird, wobei in einem Schritt (304) des Empfangens das Datenpaket (108) in dem Zeitschlitz (208) von dem Steuergerät (102) über die periphere Sensorschnittstelle (100) empfangen wird und in dem zumindest einen weiteren Zeitschlitz (210, 212, 214) das Datenpaket (108) von dem Steuergerät (102) erneut empfangen wird, und wobei in einem Schritt (306) des Überprüfens das in dem Zeitschlitz (208) empfangene Datenpaket (108) und das in dem weiteren Zeitschlitz (210, 212, 214) empfangene Datenpaket (108) miteinander verglichen werden.

2. Verfahren (300) gemäß einem der vorangegangenen Ansprüche, bei dem innerhalb des Übertragungszeitraums (206) das Datenpaket (108) in noch einem weiteren Zeitschlitz (212, 214) des Übertragungszeitraums (206) noch mal gesendet wird.

3. Verfahren (300) gemäß einem der vorangegangenen Ansprüche, bei dem im Schritt (302) des Sendens in einem zwischen dem Zeitschlitz (208) und dem weiteren Zeitschlitz (212) befindlichen zusätzlichen Zeitschlitz (210) des Übertragungszeitraums (206) ein weiteres Datenpaket (216) über die periphere Sensorschnittstelle (100) gesendet wird und innerhalb des Übertragungszeitraums (206) das weitere Datenpaket (216) in einem auf den weiteren Zeitschlitz (212) nachfolgenden Zeitschlitz (214) des Übertragungszeitraums (206) erneut gesendet wird.

4. Verfahren (300) gemäß Anspruch 5, bei dem im Schritt (304) des Empfangens in dem zusätzlichen Zeitschlitz (210) das weitere Datenpaket (216) empfangen wird und in dem auf den weiteren Zeitschlitz (212) nachfolgenden Zeitschlitz (214) das weitere Datenpaket (216) erneut empfangen wird.

5. Verfahren (300) gemäß Anspruch 6, bei dem im Schritt (306) des Überprüfens das in dem zusätzlichen Zeitschlitz (210) empfangene weitere Datenpaket (216) und das in dem auf den weiteren Zeitschlitz (212) nachfolgenden Zeitschlitz (214) empfangene weitere Datenpaket (216) miteinander verglichen werden.

6. System mit einem Steuergerät und mehreren Sensoren zum Übertragen eines Datenpakets (108) von einem der Sensoren (104) zu dem Steuergerät (102) über eine periphere Sensorschnittstelle (100), insbesondere eine periphere Sensorschnittstelle gemäß Peripheral Sensor Interface 5, PSI5, in einem durch das Steuergerät (102) synchronisierten Betriebsmodus der Sensorschnittstelle (100), in dem die Sensoren (104) über die gleiche Schnittstelle (100) betrieben werden können, da jedem der Sensoren (104) innerhalb eines Übertragungszeitraums ein eigener Zeitschlitz zugewiesen werden kann, wobei in einem abgesicherten synchronisierten Betriebsmodus nur der eine Sensor (104) über die Sensorschnittstelle (100) mit dem Steuergerät (102) verbunden ist, wobei der Übertragungszeitraum (206) mehrere aufeinander abfolgende Zeitschlitze umfasst und ein Anfang des Übertragungszeitraums durch ein von dem Steuergerät (102) bereitgestelltes Synchronisationssignal definiert wird, wobei der eine Sensor (104) zum Übertragen des Datenpakets (108) zu dem Steuergerät (102) über die periphere Sensorschnittstelle (100) eine Sendeeinrichtung (112) aufweist, die dazu ausgebildet ist, in einem durch das Steuergerät (102) abgesicherten synchronisierten Betriebsmodus der Sensorschnittstelle (100) das Datenpaket (108) in einem Zeitschlitz (208) eines Übertragungszeitraums (206) des Betriebsmodus zu senden und innerhalb des Übertragungszeitraums (206) in zumindest einem weiteren Zeitschlitz (210, 212, 214) des Übertragungszeitraums (206) das Datenpaket (108) erneut zu senden, und wobei das Steuergerät (102) zum Betreiben der peripheren Sensorschnittstelle (100) eine Empfangseinrichtung (114) aufweist, die dazu ausgebildet ist, in dem durch das Steuergerät (102) abgesicherten synchronisierten Betriebsmodus der Sensorschnittstelle (100) das Datenpaket (108) in dem Zeitschlitz (208) eines Übertragungszeitraums (206) des abgesicherten synchronisierten Betriebsmodus über die Sensorschnittstelle (100) zu empfangen und in dem zumindest einem weiteren Zeitschlitz (210, 212, 214) des Übertragungszeitraums (206) das Datenpaket (108) über die Sensorschnittstelle (100) erneut zu empfangen, und wobei das Steuergerät (102) ausgebildet ist, um das in dem Zeitschlitz (208) empfangene Datenpaket (108) und das in dem weiteren Zeitschlitz (210, 212, 214) empfangene Datenpaket (108) miteinander zu vergleichen.

7. Computerprogramm, das dazu eingerichtet ist, das Verfahren (300) gemäß einem der vorangegangenen Ansprüche 1 bis 5 auszuführen.

8. Maschinenlesbares Speichermedium, auf dem das Computerprogramm nach Anspruch 8 gespeichert ist.

## Claims

1. Method (300) for transmitting a data packet (108) from a sensor (104) to a control unit (102) via a peripheral sensor interface (100), in particular a peripheral sensor interface according to Peripheral Sensor Interface 5, PSI5, in an operating mode of the sensor interface (100) synchronized by the control unit (102), in which a plurality of sensors (104) can be operated via the same interface (100) since each sensor (104) can be allocated its own time slot within a transmission period, wherein, in the method (300), only one sensor (104) is connected to the control unit (102) via the sensor interface (100) in a secure synchronized operating mode, wherein the transmission period (206) comprises a plurality of successive time slots, and a start of the transmission period is defined by a synchronization signal provided by the control unit (102), and wherein, in a transmitting step (302), in the secure operating mode of the sensor interface (100) synchronized by the control unit (102), the data packet (108) is transmitted from the sensor (104) via the sensor interface (100) in a time slot (208) of the transmission period (206) of the secure synchronized operating mode, and the data packet (108) is transmitted from the sensor (104) again within the transmission period (206) in at least one further time slot (210, 212, 214) of the transmission period (206), wherein, in a receiving step (304), the data packet (108) is received by the control unit (102) via the peripheral sensor interface (100) in the time slot (208), and the data packet (108) is received by the control unit (102) again in the at least one further time slot (210, 212, 214), and wherein, in a checking step (306), the data packet (108) received in the time slot (208) and the data packet (108) received in the further time slot (210, 212, 214) are compared with one another.

2. Method (300) according to one of the preceding claims, in which the data packet (108) is transmitted again within the transmission period (206) in yet another time slot (212, 214) of the transmission period (206).

3. Method (300) according to one of the preceding claims, in which, in the transmitting step (302), a further data packet (216) is transmitted via the peripheral sensor interface (100) in an additional time slot (210) of the transmission period (206) between the time slot (208) and the further time slot (212), and the further data packet (216) is transmitted again within the transmission period (206) in a time slot (214) of the transmission period (206) following the further time slot (212).

4. Method (300) according to Claim 5, in which, in the receiving step (304), the further data packet (216) is received in the additional time slot (210), and the further data packet (216) is received again in the time slot (214) following the further time slot (212) .

5. Method (300) according to Claim 6, in which, in the checking step (306), the further data packet (216) received in additional time slot (210) and the further data packet (216) received in the time slot (214) following the further time slot (212) are compared with one another.

6. System having a control unit and a plurality of sensors for transmitting a data packet (108) from one of the sensors (104) to the control unit (102) via a peripheral sensor interface (100), in particular a peripheral sensor interface according to Peripheral Sensor Interface 5, PSI5, in an operating mode of the sensor interface (100) synchronized by the control unit (102), in which the sensors (104) can be operated via the same interface (100) since each of the sensors (104) can be allocated its own time slot within a transmission period, wherein only one sensor (104) is connected to the control unit (102) via the sensor interface (100) in a secure synchronized operating mode, wherein the transmission period (206) comprises a plurality of successive time slots, and a start of the transmission period is defined by a synchronization signal provided by the control unit (102), wherein, in order to transmit the data packet (108) to the control unit (102) via the peripheral sensor interface (100), the one sensor (104) has a transmitting device (112) which is designed to transmit the data packet (108) in a secure operating mode of the sensor interface (100) synchronized by the control unit (102) in a time slot (208) of a transmission period (206) of the operating mode, and to transmit the data packet (108) again within the transmission period (206) in at least one further time slot (210, 212, 214) of the transmission period (206), and wherein, in order to operate the peripheral sensor interface (100), the control unit (102) has a receiving device (114) which is designed, in the secure operating mode of the sensor interface (100) synchronized by the control unit (102), to receive the data packet (108) via the sensor interface (100) in the time slot (208) of a transmission period (206) of the secure synchronized operating mode, and to receive the data packet (108) again via the sensor interface (100) in the at least one further time slot (210, 212, 214) of the transmission period (206), and wherein the control unit (102) is designed to compare the data packet (108) received in the time slot (208) and the data packet (108) received in the further time slot (210, 212, 214) with one another.

7. Computer program which is configured to carry out the method (300) according to one of the preceding Claims 1 to 5.

8. Machine-readable storage medium on which the computer program according to Claim 8 is stored.

## Revendications

1. Procédé (300) permettant de transmettre un paquet de données (108) d'un capteur (104) à un appareil de commande (102) par une interface de capteur périphérique (100), en particulier une interface de capteur périphérique selon « Peripheral Sensor Interface 5 », PSI5, dans un mode de fonctionnement de l'interface de capteur (100), synchronisé par l'appareil de commande (102), dans lequel plusieurs capteurs (104) peuvent fonctionner au moyen de la même interface (100) puisqu'une tranche de temps particulière peut être attribuée à chaque capteur (104) pendant une période de transmission, dans le procédé (300), dans un mode de fonctionnement synchronisé sécurisé, seul ledit un capteur (104) étant relié à l'appareil de commande (102) par l'interface de capteur (100), la période de transmission (206) comprenant plusieurs tranches de temps consécutives et un début de la période de transmission étant défini par un signal de synchronisation fourni par l'appareil de commande (102), et dans lequel, dans une étape (302) d'émission, dans le mode de fonctionnement synchronisé sécurisé par l'appareil de commande (102) de l'interface de capteur (100), le paquet de données (108) est envoyé du capteur (104) par l'interface de capteur (100) dans une tranche de temps (208) de la période de transmission (206) du mode de fonctionnement synchronisé sécurisé, et le paquet de données (108) est envoyé à nouveau par le capteur (104) pendant la période de transmission (206) dans au moins une autre tranche de temps (210, 212, 214) de la période de transmission (206), dans lequel, dans une étape (304) de réception, le paquet de données (108) est reçu dans la tranche de temps (208) par l'appareil de commande (102) au moyen de l'interface de capteur périphérique (100), et dans ladite au moins une autre tranche de temps (210, 212, 214), le paquet de données (108) est à nouveau reçu par l'appareil de commande (102), et dans lequel, dans une étape (306) de vérification, le paquet de données (108) reçu dans la tranche de temps (208) et le paquet de données (108) reçu dans l'autre tranche de temps (210, 212, 214) sont comparés l'un à l'autre.

2. Procédé (300) selon l'une quelconque des revendications précédentes, dans lequel le paquet de données (108) est envoyé une nouvelle fois pendant la période de transmission (206) dans encore une autre tranche de temps (212, 214) de la période de transmission (206).

3. Procédé (300) selon l'une quelconque des revendications précédentes, dans lequel, à l'étape (302) d'émission, dans une tranche de temps supplémentaire (210) située entre la tranche de temps (208) et l'autre tranche de temps (212) de la période de transmission (206), un autre paquet de données (216) est envoyé par l'interface de capteur périphérique (100), et pendant la période de transmission (206), l'autre paquet de données (216) est à nouveau envoyé dans une tranche de temps (214) consécutive à l'autre tranche de temps (212) de la période de transmission (206) .

4. Procédé (300) selon la revendication 5, dans lequel, à l'étape (304) de réception, dans la tranche de temps supplémentaire (210), l'autre paquet de données (216) est reçu, et dans la tranche de temps (214) consécutive à l'autre tranche de temps (212), l'autre paquet de données (216) est reçu à nouveau.

5. Procédé (300) selon la revendication 6, dans lequel, à l'étape (306) de vérification, l'autre paquet de données (216) reçu dans la tranche de temps supplémentaire (210) et l'autre paquet de données (216) reçu dans la tranche de temps (214) consécutive à la tranche de temps supplémentaire (212) sont comparés l'un à l'autre.

6. Système, comprenant un appareil de commande et plusieurs capteurs pour transmettre un paquet de données (108) d'un des capteurs (104) à l'appareil de commande (102) par une interface de capteur périphérique (100), en particulier une interface de capteur périphérique selon « Peripheral Sensor Interface 5 », PSI5, dans un mode de fonctionnement de l'interface de capteur (100), synchronisé par l'appareil de commande (102), dans lequel les capteurs (104) peuvent fonctionner au moyen de la même interface (100) puisqu'il est possible d'attribuer à chacun des capteurs (104) une tranche de temps particulière pendant une période de transmission, dans un mode de fonctionnement synchronisé sécurisé, seul ledit un capteur (104) étant relié à l'appareil de commande (102) par l'interface de capteur (100), la période de transmission (206) comprenant plusieurs tranches de temps consécutives et un début de la période de transmission étant défini par un signal de synchronisation fourni par l'appareil de commande (102), dans lequel ledit un capteur (104) présente un dispositif d'émission (112) pour transmettre le paquet de données (108) à l'appareil de commande (102) par l'interface de capteur périphérique (100), ledit dispositif étant réalisé, dans un mode de fonctionnement synchronisé, sécurisé par l'appareil de commande (102), de l'interface de capteur (100), pour envoyer le paquet de données (108) dans une tranche de temps (208) d'une période de transmission (206) du mode de fonctionnement, et pour envoyer à nouveau le paquet de données (108) pendant la période de transmission (206) dans au moins une autre tranche de temps (210, 212, 214) de la période de transmission (206), et dans lequel l'appareil de commande (102) présente un dispositif de réception (114) pour faire fonctionner l'interface de capteur périphérique (100), ledit dispositif étant réalisé, dans le mode de fonctionnement synchronisé, sécurisé par l'appareil de commande (102), de l'interface de capteur (100), pour recevoir le paquet de données (108) dans la tranche de temps (208) d'une période de transmission (206) du mode de fonctionnement synchronisé sécurisé par l'interface de capteur (100), et pour recevoir à nouveau dans ladite au moins une autre tranche de temps (210, 212, 214) de la période de transmission (206) le paquet de données (108) par l'interface de capteur (100), et dans lequel l'appareil de commande (102) est réalisé pour comparer le paquet de données (108) reçu dans la tranche de temps (208) et le paquet de données (108) reçu dans l'autre tranche de temps (210, 212, 214) l'un à l'autre.

7. Programme informatique, aménagé pour effectuer le procédé (300) selon l'une quelconque des revendications précédentes 1 à 5.

8. Support de stockage lisible par machine sur lequel est stocké le programme informatique selon la revendication 8.
